# EUROPEAN PATENT APPLICATION

(11) **EP 2 990 624 A1**
(43) Date of publication of application: **02.03.2016**
(21) Application number: 15182188.1
(22) Date of filing: 24.08.2015
(51) Int. Cl.: F01P 11/02, F01P 11/04

(54) **COOLING SYSTEM FOR A WORK VEHICLE**

(30) Priority: 26.08.2014 US 201414468402
(71) Applicant: CNH Industrial Italia S.p.A., 10135 Torino (IT)
(72) Inventor: BALCOM, Stephen M., Naperville, Illinois 60540 (US); ADUPALA, Rajeshwar, Naperville, Illinois 60540 (US); BUNNELL, Michael C., Clarendon Hills, IL Illinois 60514 (US); KLASSEN, Mark D., Lockport, IL Illinois 60441 (US); MOREY, Daniel Alan, Mundelein, IL Illinois 60060 (US)
(74) Representative: CNH Industrial IP Department

(57) **Abstract**

A liquid cooling system (100) for a work vehicle (10) may generally include an expansion tank (112) and a deaeration line (138) having a fluid conduit (128) which fluidly couples the expansion tank (112) to a component of the cooling system. The fluid conduit (128) defines a flow passage (146) therein and includes an upstream portion (140), a downstream portion (142) and an intermediate portion (144) where the intermediate portion (144) is defined between the upstream (140) and downstream (142) portions. The flow passage (146) within the intermediate portion (144) has cross-sectional shape which restricts liquid coolant flow between the component and the expansion tank (112) during operation of the work vehicle (10).

## Description

### FIELD OF THE INVENTION

The present subject matter relates generally to work vehicles and, more particularly, to a cooling system for a work vehicle.

### BACKGROUND OF THE INVENTION

A work vehicle generally includes an engine and a pressurized liquid cooling system for cooling the engine during operation. Typically, the cooling system includes various components including a heat exchanger such as an air cooled radiator, a centrifugal pump such as a water pump, a cooling circuit defined within the engine, a thermostat and an expansion or surge tank which is fluidly coupled to one or more of the components of the cooling system such as the cooling circuit and/or the heat exchanger.

During operation, a liquid coolant flows from the heat exchanger at a first temperature, through the water pump and into the cooling circuit. The liquid coolant is routed through the cooling circuit to provide cooling to various internal components within the engine before flowing through the thermostat and back into an inlet of the heat exchanger at a second higher temperature. As the liquid coolant flows through the water pump, various fluid conduits and the cooling circuit, cavitation and/or other factors may result in air bubbles becoming entrapped within the liquid coolant. In addition, air which normally resides at a top portion of the heat exchanger when the cooling system is inactive also may contribute to air bubbles in the liquid coolant. The air bubbles may negatively impact the overall performance of the engine and/or the cooling system.

Conventionally, the air bubbles are removed from the liquid coolant by routing a portion of the liquid coolant including the entrapped air bubbles to the expansion tank via one or more vent or deaeration lines. The liquid coolant collects in the expansion tank and the air bubbles separate from the liquid coolant. The liberated air is then vented to the atmosphere. The collected liquid coolant is then routed back to the cooing circuit via the water pump.

Typically, the deaeration lines are fluidly open to the expansion tank. As a result, excess liquid coolant may flow into the expansion tank during operation of the engine, thus reducing the amount or volume of liquid coolant flowing directly back into the heat exchanger. In addition, the expansion tank is not as efficient as the heat exchanger at cooling the liquid coolant, thereby reducing the overall effectiveness of the cooling system.

Accordingly, an improved cooling system for a work vehicle engine which restricts or reduces liquid coolant flow into the expansion tank during operation of the engine would be welcomed in the technology.

### BRIEF DESCRIPTION OF THE INVENTION

Aspects and advantages of the invention will be set forth in part in the following description, or may be obvious from the description, or may be learned through practice of the invention.

In one aspect, the present subject matter is directed to a liquid cooling system for a work vehicle. The cooling system may generally include an expansion tank and a deaeration line having a fluid conduit which fluidly couples the expansion tank to a component of the cooling system. The fluid conduit defines a flow passage therein and includes an upstream portion, a downstream portion and an intermediate portion where the intermediate portion is defined between the upstream and downstream portions. The flow passage within the intermediate portion has cross-sectional shape which restricts liquid coolant flow between the component and the expansion tank during operation of the work vehicle.

In another aspect, the present subject matter is directed to a liquid cooling system for a work vehicle. The cooling system may generally include a cooling system component, the cooling system component including one of a cooling circuit defined within the engine and a heat exchanger, the cooling circuit having an inlet, an outlet and an auxiliary outlet coupled to the inlet, the heat exchanger being fluidly coupled to the outlet of the cooling circuit. The cooling system may further include an expansion tank and a deaeration line. The deaeration line includes a first fluid conduit fluidly coupling the expansion tank to one of the cooling system components. The first fluid conduit defines a flow passage therein and includes an upstream portion which is in fluid communication with the cooling system component, a downstream portion which is in fluid communication with the expansion tank and an intermediate portion which is defined between the upstream and downstream portions. The flow passage in the upstream portion has a first cross-sectional flow area and the flow passage within the intermediate portion has a second cross-sectional flow area. The second cross-sectional flow area is less than the first cross-sectional flow area to restrict liquid coolant flow between the cooling system component and the expansion tank during operation of the work vehicle.

In a further aspect, the present subject matter is directed to a cooling system for a work vehicle. The cooling system may generally include an expansion tank and a fluid conduit which fluidly couples the expansion tank to a component of the cooling system where the fluid conduit defines a flow passage therein. The system further includes a flow restrictor disposed within the flow passage and fully inscribed within the fluid conduit. The flow restrictor restricts liquid coolant flow between the heat exchanger and the expansion tank.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a side view of one embodiment of a work vehicle as may incorporate various embodiments of the present invention;
FIG. 2 illustrates a schematic view of an exemplary cooling system of the work vehicle as may be incorporated with one or more embodiments of the present invention;
FIG. 3 illustrates a cross-sectional side view of a portion of an exemplary fluid conduit of an exemplary deaeration line according to one embodiment of the present invention;
FIG. 4 illustrates a cross-sectional front view of an upstream portion of an exemplary fluid conduit according to one embodiment of the present invention;
FIG. 5 illustrates a cross-sectional front view of an intermediate portion of the exemplary fluid conduit as shown in FIG. 4, according to one embodiment of the present invention;
FIG. 6 illustrates a cross-sectional front view of an intermediate portion of the exemplary fluid conduit as shown in FIG. 4, according to one embodiment of the present invention;
FIG. 7 illustrates a cross-sectional front view of an intermediate portion of the exemplary fluid conduit as shown in FIG. 4, according to one embodiment of the present invention;
FIG. 8 illustrates a cross-sectional front view of an intermediate portion of the exemplary fluid conduit as shown in FIG. 4, according to one embodiment of the present invention;
FIG. 9 illustrates a cross-sectional front view of an intermediate portion of the exemplary fluid conduit as shown in FIG. 4, according to one embodiment of the present invention;
FIG. 10 illustrates a cross-sectional front view of an intermediate portion of the exemplary fluid conduit as shown in FIG. 4, according to one embodiment of the present invention;
FIG. 11 illustrates a perspective side of an exemplary fluid conduit of an exemplary deaeration line including a flow restrictor fully inscribed within the fluid conduit, according to one embodiment of the present invention; and
FIG. 12 illustrates a cross-sectional front view of a portion of the exemplary fluid conduit as shown in FIG. 11, according to one embodiment of the present invention.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

In general, the present subject matter is directed to a liquid cooling system for a work vehicle. Specifically, in several embodiments, the cooling system corresponds to a fluid conduit which fluidly couples a component of the cooling system such as a heat exchanger (i.e. radiator) or a cooling circuit defined within the engine to an expansion tank. The fluid conduit is configured to restrict liquid coolant flow between the component and the expansion tank during operation of the engine. By reducing the liquid coolant flow to the expansion tank, additional liquid coolant may remain within the cooling circuit, thus improving overall cooling efficiency of the cooling system. In addition or in the alternative, reduction of the liquid coolant flow to the expansion tank may provide additional time for the entrapped air/gas to separate from the liquid coolant already collected in the expansion tank.

For example, as will be described in greater detail below, an intermediate portion the fluid conduit may have cross-sectional shape which is different from a cross-section shape of an upstream portion of the fluid conduit, thus reducing or restricting liquid coolant flow through the fluid conduit to the expansion tank. In addition or in the alternative, the intermediate portion of the fluid conduit may have a cross-sectional flow area which is smaller or more constricted than the cross-section flow area of the upstream portion, thus reducing or restricting liquid coolant flow to the expansion tank. In addition or in the alternative, a flow restrictor may be disposed within the fluid conduit along the intermediate portion so as to reduce the cross-sectional flow area of the fluid conduit, thus reducing or restricting liquid coolant flow through the fluid conduit to the expansion tank.

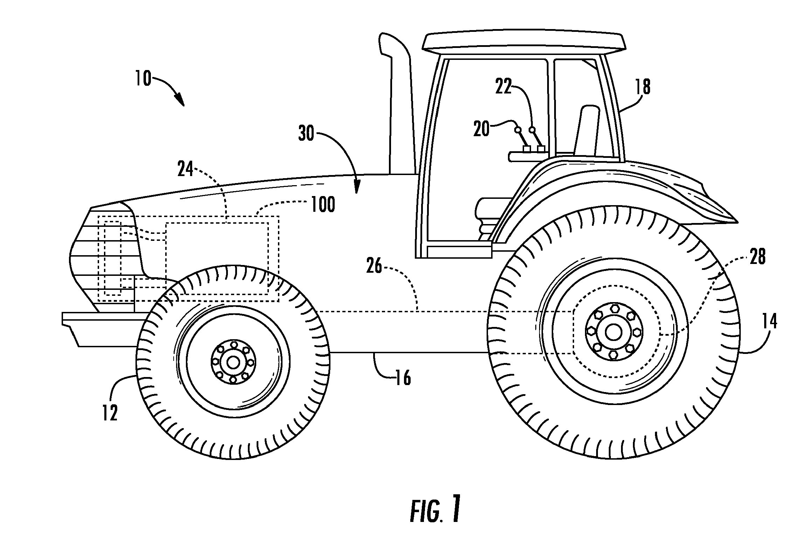

Referring now to the drawings, FIG. 1 illustrates a side view of one embodiment of a work vehicle 10. As shown, the work vehicle 10 is configured as an agricultural tractor. However, in other embodiments, the work vehicle 10 may be configured as any other suitable work vehicle known in the art, such as various other agricultural vehicles, earth-moving vehicles, loaders and/or various other off-road vehicles.

As shown in FIG. 1, the work vehicle 10 includes a pair of front wheels 12, a pair or rear wheels 14 and a chassis 16 coupled to and supported by the wheels 12, 14. An operator's cab 18 may be supported by a portion of the chassis 16 and may house various control or input devices 20, 22 (e.g., levers, pedals, control panels, buttons and/or the like) for permitting an operator to control the operation of the work vehicle 10. For instance, as shown in FIG. 1, the work vehicle 10 may include a Forward-Neutral-Reverse-Park (FNRP) lever 20 and an emergency brake lever 22 configured to be communicatively coupled to a suitable controller (not shown) for electronically controlling the operation of the vehicle 10. In addition, the work vehicle 10 may include an engine 24 and a transmission 26 mounted on the chassis 16. The transmission 26 may be operably coupled to the engine 24 and may provide variably adjusted gear ratios for transferring engine power to the wheels 14 via an axle/differential 28. The engine 24, transmission 26, and axle/differential 28 may collectively define a drivetrain 30 of the work vehicle 10.

It should be appreciated that the configuration of the work vehicle 10 described above and shown in FIG. 1 is provided only to place the present subject matter in an exemplary field of use. Thus, it should be appreciated that the present subject matter may be readily adaptable to any manner of work vehicle configuration 10. For example, in an alternative embodiment, a separate frame or chassis may be provided to which the engine 24, transmission 26, and differential 28 are coupled, a configuration common in smaller tractors. Still other configurations may use an articulated chassis to steer the work vehicle 10, or rely on tracks in lieu of the wheels 12, 14. Additionally, although not shown, the work vehicle 10 may also be configured to be operably coupled to any suitable type of work implement, such as a trailer, spray boom, manure tank, feed grinder, plow and/or the like. In particular embodiments, the work vehicle includes a pressurized liquid cooling system 100 fluidly coupled to the engine 24.

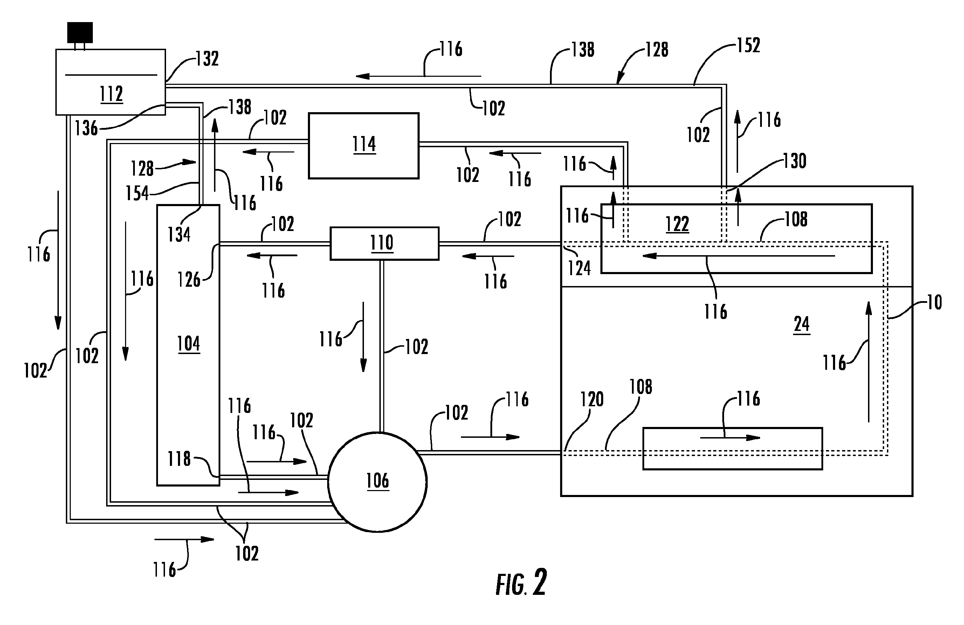

FIG. 2 provides a flow diagram of one embodiment of the cooling system 100 fluidly coupled to the engine 24 for use with the work vehicle 10 shown in FIG. 1. In general, the cooling system 100 will be described herein with reference to cooling the engine 24 of the work vehicle 10. However, the disclosed cooling system 100 may generally be utilized to cool an engine of any given work vehicle.

As shown in FIG. 2, the cooling system 100 generally includes various components fluidly coupled via multiple fluid conduits 102 such as hoses or pipes so as to form a closed loop cooling system. Conventionally, the components of the cooling system 100 include a heat exchanger 104 such as an air cooled radiator, a centrifugal or water pump 106, a cooling circuit or channel 108 defined within the engine 24 and shown in dotted lines, a thermostat 110 and an expansion or surge tank 112. In particular configurations, the cooling system 100 also may include a secondary heat exchanger or heater 114 for providing heat to the operator cab 18 (FIG. 1).

In operation, the water pump 106 causes a liquid coolant 116 to flow from an outlet 118 of the heat exchanger 104 into an inlet 120 of the cooling circuit 108. The liquid coolant 116 circulates through various channels of the cooling circuit 108 within the engine 24, including but not limited to an oil cooler (not shown) and/or a cylinder head portion 122 of the engine 24. The liquid coolant 116 then flows out of the cooling circuit 108 via outlet 124, through the thermostat 110 and into an inlet 126 of the heat exchanger 104. The heat exchanger 104 removes thermal energy from the liquid coolant 116 as it is routed back to the outlet 118 before being recirculated through the cooling circuit 108 via the water pump 106. In particular configurations, a portion of the liquid coolant 116 may flow from the thermostat 110 directly to the pump 106. In certain embodiments, wherein the cooling system 100 includes the secondary heat exchanger 114, a portion of the liquid coolant 116 may be routed from the cooling circuit 108, to the secondary heat exchanger 114 and back to the pump 106.

As the liquid coolant 116 flows through the various components of the cooling system 100, such as the cooling circuit 108 and/or the heat exchanger 104, cavitation within the cooling system and/or other factors may result in air becoming entrapped within the liquid coolant 116, particularly in the cylinder head portion 122 of the engine 24, thereby potentially having a negative effect on the overall performance of the engine 24 and/or cooling system 100. In order to allow the entrapped air to escape from the liquid coolant 116, various components of the cooling system 100 may be fluidly coupled to the expansion tank 112 via vent or deaeration lines 128.

As shown in FIG. 2, a deaeration line 128 may extend between an auxiliary outlet 130 of the cooling circuit 108 and an inlet 132 of the expansion tank 112 so as to fluidly couple the cooling circuit 108 to the expansion tank 112. In addition or in the alternative, a deaeration line 128 may extend between an overflow outlet 134 of the heat exchanger 104 and an inlet 136 of the expansion tank 112 so as to fluidly couple the heat exchanger 104 to the expansion tank 112. The deaeration line(s) 128 may comprise one or more fluid conduits such as pipes or hoses fluidly connected in series and which define a flow path between the corresponding component and the expansion tank.

Because the deaeration line(s) 128 are always fluidly open to the expansion tank 112, there is the possibility that too much of the liquid coolant 116 will freely flow into the expansion tank 112, thus unnecessarily depleting the volume of liquid coolant 116 flowing directly back to the heat exchanger 104 from the cooling circuit 108. In addition, the expansion tank 112 is not generally effective at cooling the liquid coolant 116 collected in the expansion tank 112. Therefore, it is beneficial to restrict or reduce the flow of liquid coolant 116 to the expansion tank 112 in order to improve the overall performance of the cooling system 100 by allowing a minimum amount of liquid coolant 116 to flow to the expansion tank 112, while still providing a flow path to the deaeration tank 112 for the entrapped air.

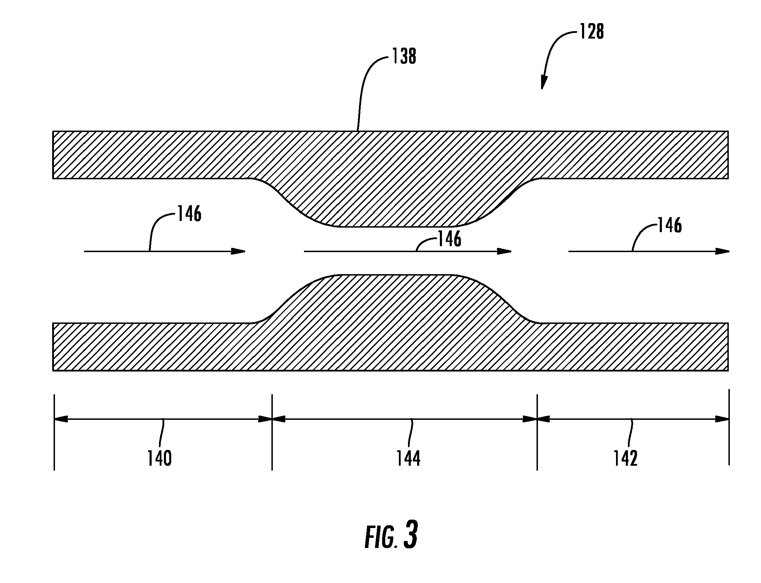

FIG. 3 provides an enlarged cross-sectional side view of an exemplary fluid conduit 138 of an exemplary deaeration line 128 according to various embodiments of the present invention. As shown in FIG. 3, the fluid conduit 138 includes an inlet or upstream portion 140, an outlet or downstream portion 142 and an intermediate portion 144 which is defined between the upstream and downstream portions 140, 142. The fluid conduit 138 is continuous or unbroken between the upstream portion 140 and the downstream portion 142 and defines a continuous or unbroken flow passage 146 therein. The upstream portion 140 may be configured to connect directly to an outlet of a component of the cooling system 100 or to an adjacent fluid conduit of the deaeration line 128. The downstream portion 142 may be configured to connect directly to the expansion tank 112 (FIG. 2) or to an adjacent fluid conduit of the deaeration line 128. In particular embodiments, the intermediate portion 144 corresponds to a portion of the fluid conduit 138 where a cross-sectional area and/or cross-sectional shape of a portion of the flow passage 146 varies or is different from a cross sectional area and/or cross-sectional shape of a portion of the flow passage 146 which is upstream therefrom.

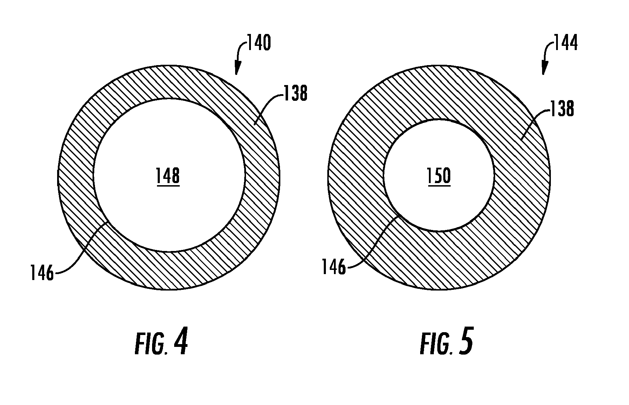

FIG. 4 provides a cross-sectional front view of the upstream portion 140 of the fluid conduit 138 and FIG. 5 provides a cross-sectional front view of the intermediate portion 144 of the fluid conduit 138 according to one embodiment of the present invention. As shown in FIG. 4 a portion of the flow passage 146 defined within the upstream portion 140 has a first cross-sectional flow area 148. As shown in FIG. 5, a portion of the flow passage 146 defined within the intermediate portion 144 of the fluid conduit 138 has a second cross-sectional flow area 150. In one embodiment, as shown in FIGS. 4 and 5, the second cross-sectional flow area 150 is less than the first cross-sectional flow area 148 so as to restrict flow of the liquid coolant 116 between the cooling system 100 component, such as the cooling circuit 108 and/or the heat exchanger 104 and the expansion tank 112 while allowing for the entrapped air to pass to the expansion tank 112. For example, in particular embodiments, the second cross-sectional flow area 150 may be at least 10 percent to at least 80 percent less than the first cross-sectional area 148.

In various embodiments, the flow of liquid coolant from the cooling system 100 component such as the cooling circuit 108 and/or the heat exchanger 104 to the expansion tank 112 may be restricted or reduced by varying a cross-sectional shape of the flow passage 146 defined within the fluid conduit 138. For example, the portion of the flow passage 146 defined in the upstream portion 140 of the fluid conduit 138 may have a substantially circular cross-sectional shape, as shown in FIG. 4, and the portion of the flow passage 146 defined within the intermediate portion 144 may have a substantially non-circular cross-sectional shape. In other embodiments, the portion of the flow passage 146 in the intermediate portion 144 may have a substantially circular cross-sectional shape but may be smaller in diameter than the portion of the flow passage 146 extending through the upstream portion 140. The flow passage 146 in the intermediate portion 144 may have any non-circular cross-sectional shape which reduces or restricts flow between a corresponding component of the cooling system 100 and the expansion tank.

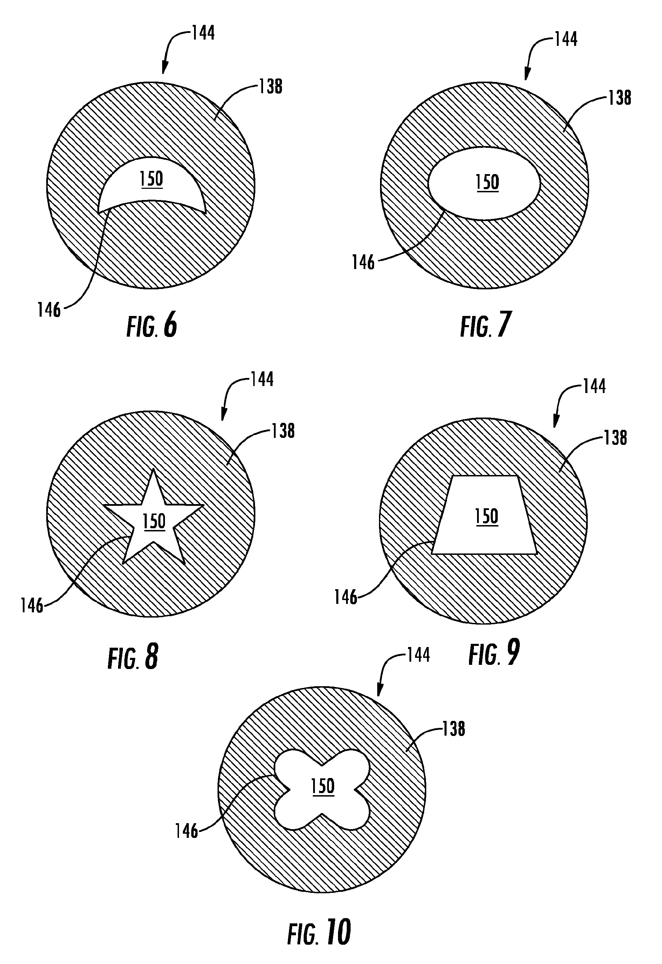

FIGS. 6, 7 8, 9 and 10 provide various exemplary cross-sectional shapes of the flow passage 146 within the intermediate section 144 of the fluid conduit 138 according to various embodiments of the present invention. In one embodiment, as shown in FIG. 6, the cross-sectional shape of the flow passage 146 within the intermediate section 144 may be substantially crescent shaped. In one embodiment, as shown in FIG. 7, the cross-sectional shape of the flow passage 146 within the intermediate section 144 may be substantially oval or elliptical shaped. In one embodiment, as shown in FIG. 8, the cross-sectional shape of the flow passage 146 within the intermediate section 144 may be substantially star shaped. In one embodiment, as shown in FIG. 9, the cross-sectional shape of the flow passage 146 within the intermediate section 144 may be substantially polygonal. In one embodiment, as shown in FIG. 10, the cross-sectional shape of the flow passage 146 within the intermediate section 144 may include multiple lobes in a daisy petal or cross pattern.

In addition to having varying cross-sectional shapes, in particular embodiments, the first cross-sectional flow area 148 of the flow passage 146 in the upstream portion 140 and the second cross-sectional flow area 150 of the flow passage 146 within the intermediate portion 144 may be different or varying. For example, the second cross-sectional flow area 150 of the portion of the flow passage 146 defined within the intermediate portion 144 may be less than the first cross-sectional flow area 148 of the flow passage defined within the upstream portion 140.

As previously provided, the cooling system 100 may include one or more of the deaeration lines 128 which include a fluid conduit 138 as described and shown herein for restricting or reducing liquid coolant flow to the expansion tank 112. For example, in one embodiment, a first deaeration line 152 having a fluid conduit 138 as described herein fluidly couples the cooling circuit 108 to the expansion tank 112. In addition or in the alternative, a second deaeration line 154 having a fluid conduit 138 as described herein fluidly couples the heat exchanger 104 to the expansion tank 112.

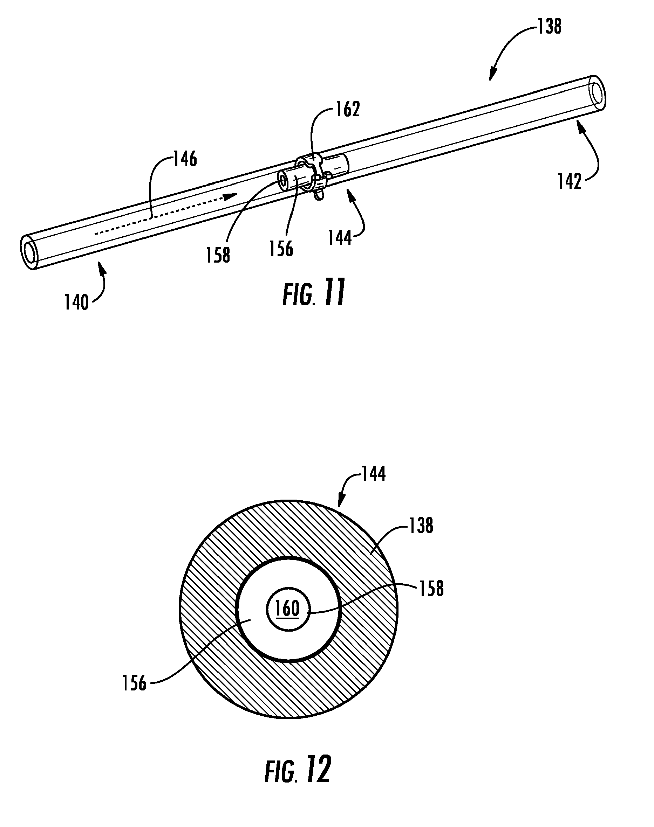

In one embodiment, a flow restrictor 156 may be disposed within the portion of the flow passage 146 of the fluid conduit 138 so as to restrict the flow of the liquid coolant 116 from a corresponding component of the liquid coolant system 100 such as the cooling circuit 108 and/or the heat exchanger 104 to the expansion tank 112. FIG. 11 provides a perspective view of an exemplary flow restrictor disposed within the fluid conduit 138 of a deaeration line 128 according to one or more embodiments of the present invention. As shown in FIG. 11, the flow restrictor 156 is fully inscribed within the fluid conduit 138. FIG. 12 provides a front cross-sectional view of the fluid conduit 138 and the flow restrictor 156 according to one or more embodiments.

As shown in FIGS. 11 and 12, the flow restrictor includes a flow orifice 158 having a cross-sectional flow area 160 which is smaller than the cross sectional area 148 of the portion of the flow passage 146 defined within the upstream portion of the fluid conduit 138 (FIG. 4), thus restricting or reducing flow of the liquid coolant through the deaeration line 128 to the expansion tank 112. The flow restrictor orifice may have any cross sectional shape such as any of those shown in FIGS. 5-10. As shown, the flow restrictor may be held in position by a clamp 162 or other mechanical fastener suitable to hold the flow restrictor in place during operation of the cooling system 100. In alternate embodiments, the flow restrictor may be molded in place.

This written description uses examples to disclose the invention, including the best mode, and also to enable any person skilled in the art to practice the invention, including making and using any devices or cooling systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A liquid cooling system (100) for an engine (24) of a work vehicle (10), the cooling system (100) comprising:
an expansion tank (112) and a deaeration line (128) having a fluid conduit (138) fluidly coupling the expansion tank (112) to a component of the cooling system, the fluid conduit (138) defining a flow passage (146) therein, the fluid conduit (138) having an upstream portion (140), a downstream portion (142) and an intermediate portion (144) defined between the upstream (140) and downstream (142) portions;
wherein the flow passage (146) within the intermediate portion (144) has cross-sectional shape which restricts liquid coolant flow between the component and the expansion tank (112).

2. The cooling system (100) of claim 1, wherein the flow passage in the upstream portion (140) has a first cross-sectional flow area (148) and the flow passage in the intermediate portion (144) has a second cross-sectional flow area (150), wherein the second cross-sectional flow area (150) is less than the first cross-sectional flow area (148).

3. The cooling system (100) of claim 1, wherein the cross-sectional shape of the flow passage in the intermediate portion (144) is circular.

4. The cooling system of (100) claim 1, wherein the cross-sectional shape of the flow passage in the intermediate portion (144) is non-circular.

5. The cooling system (100) of claim 1, wherein the cross-sectional shape of the flow passage in the intermediate portion (144) is crescent, elliptical or cross shaped.

6. The cooling system (100) as in claim 1, wherein the cross-sectional shape of the flow passage in the intermediate portion (144) is polygonal.

7. The cooling system (100) as in claim 1, wherein the component of the cooling system is a cooling circuit defined within the engine (24) of the work vehicle (10).

8. The cooling system (100) of claim 1, wherein the component of the cooling system is a heat exchanger (104).
